# FASCICULE DE BREVET EUROPEEN

(11) **EP 2 863 830 B1**
(45) Date de publication et mention de la délivrance du brevet: **23.08.2017**
(21) Numéro de dépôt: 13737306.4
(22) Date de dépôt: 10.06.2013
(51) Int. Cl.: A61C 5/90

(54) **PROTECTION INTRA-BUCCALE**
BISSSCHIENE
MOUTHGUARD

(30) Priorité: 26.06.2012 FR 1201799
(43) Date de publication de la demande: 29.04.2015
(73) Titulaire: MO 205, 17000 La Rochelle (FR)
(72) Inventeur: BRAUD, Vincent, 17000 La Rochelle (FR)
(74) Mandataire: Tournel, Jean Louis
(86) Numéro de dépôt international: PCT/FR2013/000145
(87) Numéro de publication internationale: WO 2014/001655

(56) Documents cités:
- US-A- 5 730 599
- US-A1- 2003 134 253

## Description

L'invention se rapporte à un dispositif de protection de la cavité buccale lors des interventions sur les dents.

Lors des interventions sur les dents, le patient doit tenir la bouche ouverte. Le chirurgien peut alors accéder aux dents pour intervenir sur celles-ci en prenant soin de ne pas blesser l'intérieur de la joue et/ou la langue.

Donc, pour accéder aux dents, le patient doit maintenir la bouche ouverte ce qu'il fait. Cependant si l'intervention est longue, les mâchoires se rapprochent progressivement car maintenir la bouche ouverte pendant une longue période n'est pas facile.

Le premier problème est donc le maintien de la bouche ouverte.

Le second problème est d'éviter de blesser la langue et/ou l'intérieur de la joue Une technique ancienne, encore utilisée, consiste à écarter la joue et la langue avec des tampons cylindriques en coton que l'on place de part et d'autre de la zone de travail et/ou entre les arcades dentaires.

Cette technique a été améliorée par des dispositifs qui permettent de repousser la langue vers l'arrière et maintenir la bouche ouverte.

Pour maintenir la bouche ouverte, il existe donc des dispositifs comportant une cale épaisse que l'on positionne entre les arcades inter-dentaires du coté opposé à celui où se localise la dent à traiter. Parmi les dispositifs existants de l'art antérieur permettant de protéger la cavité buccale, celui décrit par le document US2003/0134253 A1 est un dispositif de protection buccale comprenant une cale dentaire destinée à se positionner entre les arcades dentaires d'un côté de la bouche, et une lame de protection comportant une première partie destinée à repousser la langue et une seconde partie destinée à être en appui sur l'autre côté de la bouche dans la partie vestibulaire. Cette lame comporte une partie qui repousse la langue qui se raccorde à un volet latéral qui s'appuie sur l'autre coté de la bouche en se positionnant entre la joue et les dents dans le vestibule. La lame déployée à plat forme en vue de face une sorte de huit couché.

Pour que cette lame se positionne correctement et reste en place, la liaison entre la cale dentaire et la lame est rigide en sorte que c'est le positionnement de la cale qui oriente la lame. La rigidité de la liaison est contraignante dans la conception du dispositif et dans le positionnement car chaque bouche est particulière alors que le dispositif est du type standard.

L'invention vise à apporter une solution aux problèmes évoqués plus haut.

A cet effet, l'invention a pour objet un dispositif de protection buccale comprenant une cale dentaire destinée à se positionner entre les arcades dentaires d'un coté de la bouche, une lame de protection comportant une première partie repoussant la langue et une seconde partie venant en appui sur l'autre coté de la bouche ce dispositif étant caractérisé en ce que la seconde partie de la lame est prolongée par un retour pour former un crochet se positionnant à la commissure des lèvres.

L'invention sera bien comprise à l'aide de la description ci après faite à titre d'exemple non limitatif en regard du dessin qui représente :

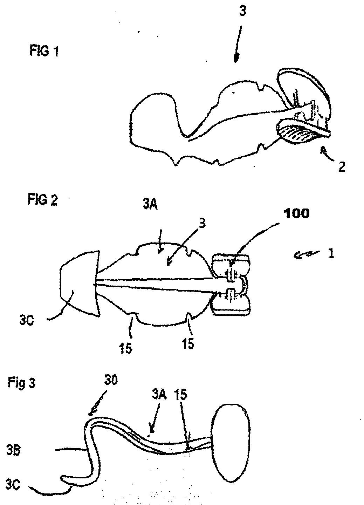

FIG 1 : Le dispositif de protection vue en perspective
FIG 2 : le dispositif de la figure 1 vue de face
FIG 3 : le dispositif de la figure 1 vue de dessus

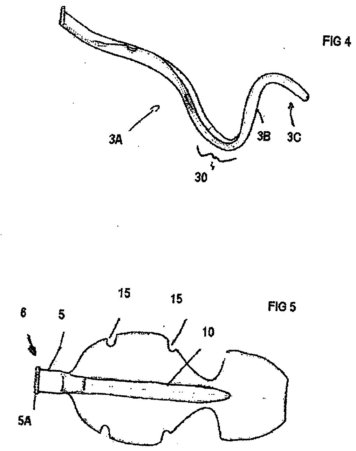

FIG 4 : La lame du dispositif de la figure 1 seule
FIG 5 : la lame de la figure 4 vue de face

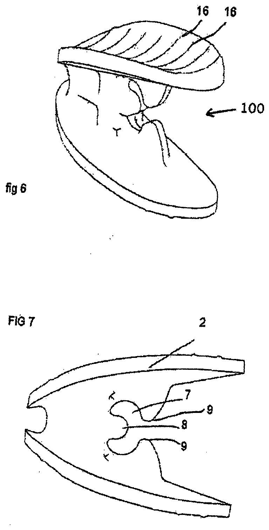

FIG 6 : la cale seule en perspective
FIG 7 : la cale de la figure 6 en vue latérale

En se reportant aux figures, on voit un dispositif 1 de protection buccale que l'on utilise pour les interventions dentaires. Ce dispositif est destiné à maintenir la bouche du patient ouverte et pour cela, on utilise une cale 2 dont la hauteur et sa position au niveau des arcades dentaires détermine l'ouverture de la bouche.

A cette cale est associée une lame 3 de protection comportant une première partie 3A et une seconde partie 3B venant en appui sur l'autre coté de la bouche ce dispositif étant caractérisé en ce que la seconde partie 3B de la lame est prolongée par un retour 3C destiné à s'appuyer sur la joue externe pour former un crochet se positionnant à la commissure des lèvres.

Le crochet est tourné vers l'arrière.

Lorsque le dispositif est mis en place, il est tenu aux deux extrémités. Il est donc immobilisé d'un coté par la cale entre les mâchoires et de l'autre coté par le crochet qui, formé par la seconde partie 3B et le retour 3C, est engagé avec la joue.

Il y a donc un positionnement sécurisant.

La première partie 3A repousse la langue et la protège, La seconde partie 3B vient protéger la joue en se glissant entre la joue et les dents, cette zone étant appelée le vestibule.

En outre, la première partie 3A de la lame à une hauteur supérieure à la distance entre le plancher et le palais de la bouche ce qui contraint la lame à se plier lorsqu'elle est mise en place et donc cet « écrasement » augmente le maintien. Entre les différentes parties de la lame, il y a une réduction de matière pour pouvoir orienter les parties les unes par rapport aux autres. On notera que la réduction 30 entre la première partie 3A de la lame et la seconde partie 3B permet de se positionner derrière les molaires et d'obtenir un calage par pincement.

La mise en place peut commencer par le positionnement du crochet puis par la position de la cale.

Ce retour ne sert pas à la protection mais permet de remplacer une liaison rigide entre la lame et la cale, par une liaison souple 100 du type à emboitement rapide avec un jeu facilitant l'orientation de la lame par rapport à la cale. La liaison se fait sur la face avant de la cale, c'est-à-dire la face de la cale opposée au fond de la bouche.

La liaison 100 entre la cale et la lame se présente de la manière suivante :
La lame 3 comporte une pièce mâle 5 en forme de profilé en C, la concavité 6 du C étant orientée vers la cale , ce profilé venant s'emboiter dans une cavité 7 complémentaire avec une ouverture déformable pour le passage en force du C. La cavité 7 recevant le profilé en C est située à l'avant de la cale.

Lorsque la lame est associée à la cale, la concavité 6 du profilé coiffe un bourrelet 8. Ce profilé en C peut légèrement se déplacer angulairement par rapport à ce bourrelet et par conséquence permettre l'orientation de la lame 3. La cale présente donc une élasticité permettant le montage du profilé en C par déformation élastique de la cale en ouvrant les lèvres 9 qui réduisent l'entrée de la cavité. Le montage de cette lame permet des ajustements en rotation et en translation de la lame par rapport à la cale. Le réglage est facilité car l'autre extrémité de la lame est positionnée à la commissure des lèvres.

L'extrémité libre de cette forme en demi-tube (profilé en C) présente une butée 5A qui limite le déplacement axial dudit profilé dans la cavité 7 ouverte de la cale. La forme en demi-tube peut coulisser dans la limite de sa longueur.

La cale est donc élastiquement déformable en compression et présente deux zones d'appui opposées pour les dents.

Cette élasticité (reste faible) de la cale présente un autre avantage pour le patient qui peut mordre la cale sans percevoir une mauvaise sensation et en mordant cette cale, il vient pincer le profilé en C qui se verrouille.

On a donc réalisé une fixation rapide, ajustable et souple.

Cette forme en demi-tube (hémi-cylindre creux) localisée sur le coté de la lame pour constituer une des deux parties complémentaires d'un moyen de liaison avec la cale se prolonge sensiblement jusqu'au bout de la deuxième partie de la lame avant le retour formant ainsi une nervure 10 longitudinale qui donne à la lame une rigidité dans sa forme ondulée longitudinalement.

Si on regarde le dispositif, la première partie 3A a une forme de feuille allongée qui après élargissement se rétrécie en s'éloignant de la cale pour se prolonger par une zone de transition 30 qui est courbe et positionne la deuxième partie 3B dans une direction de l'ordre de 90° par rapport à la première partie et, cette deuxième partie est prolongée par un retour 3C pour former un crochet.

La lame présente une face courbe dont la concavité est orientée vers l'avant donc vers l'entrée de la bouche. Le choix des variations d'épaisseurs de lame et de leurs localisations confère à cette lame plus ou moins de souplesse.

On notera la présence d'encoches 15 sur le bord de la lame pour permettre aux fluides de circuler et qui seront aspirés par un moyen non représenté.

Comme cela a été dit, la cale est compressive donc non strictement rigide. Des nervures 16 au niveau des zones d'appui empêchent le glissement suivant l'axe longitudinal de la cale. Les zones d'appui sont en outre concaves dans l'axe transverse pour limiter transversalement le déplacement des dents et donc positionner les dites dents.

La liaison démontable entre la cale et la lame permet un démontage rapide et un traitement séparé des éléments constituant le dispositif pour une meilleur stérilisation.

La liaison démontable permet de choisir une cale parmi un jeu de cales et une lame parmi un jeu de lames de tailles différentes.

La matière de la cale peut être de nature différente à celle de la lame de sorte que l'on peut mouler chaque pièce individuellement ce qui évite les contraintes de moulage si on fait de la bi-injection.

Chaque pièce est stérilisable.

## Revendications

1. Dispositif de protection buccale comprenant une cale (2) dentaire destinée à se positionner entre les arcades dentaires d'un coté de la bouche, une lame (3) de protection comportant une première partie (3A) destinée à repousser la langue et une seconde partie (3B) destinée à venir en appui sur l'autre côté de la bouche dans le vestibule, ce dispositif étant **caractérisé en ce que** la seconde partie (3B) de la lame (3) est prolongée par un retour (3C) pour former un crochet se positionnant à la commissure des lèvres.

2. Dispositif de protection buccale selon la revendication 1 **caractérisé en ce que** la lame (3) est associée à la cale (2) par une liaison souple (100) du type à emboîtement rapide avec un jeu facilitant l'orientation de la lame par rapport à la cale (2).

3. Dispositif de protection buccale selon la revendication 2 **caractérisé en ce que** la liaison souple (100) comprend une pièce mâle (5) en forme de profilé en C, la concavité (6) du C étant orientée vers la cale (2), ce profilé venant s'emboiter dans une cavité (7) complémentaire de la cale (2) avec une ouverture déformable pour le passage en force du profilé en C.

4. Dispositif de protection buccale selon la revendication 3 **caractérisé en ce que** la longueur du profilé en C permet au dit profilé un déplacement en translation dans la cavité qui l'accueille.

5. Dispositif de protection buccale selon la revendication 3 ou 4 **caractérisé en ce que** la concavité du profilé en C coiffe un bourrelet (8) de la cale (2).

6. Dispositif de protection buccale selon l'une quelconque des revendications précèdentes **caractérisé en ce que** la cale (2) est déformable élastiquement par compression et présente des zones d'appui opposées pour les dents.

7. Dispositif de protection buccale selon la revendication 6 **caractérisé en ce que** les zones d'appui des dents présentent des nervures (1b) qui empêchent le glissement suivant l'axe longitudinal de la cale et ces zones d'appui sont en outre concaves dans l'axe transverse pour positionner transversalement les dents.

8. Dispositif de protection selon la revendication 1 **caractérisé en ce que** la première partie (3A) de la lame (3) a une forme de feuille allongée qui se rétrécit en s'éloignant de la cale (2) pour se prolonger par une zone de transition (30) qui est courbe et positionne la deuxième partie (3B) de la lame (3) dans une direction de l'ordre de 90° par rapport à la première partie (3A) et, cette deuxième partie (3B) est prolongée par un retour (3C) pour former un crochet.

9. Dispositif de protection selon la revendication 8 **caractérisé en ce qu'**une réduction (30) de matière entre la première partie (3A) de la lame (3) et la seconde partie (3B) permet un positionnement derrière les molaires et d'obtenir un calage par pincement.

## Patentansprüche

1. Mundschutzvorrichtung, umfassend einen dentalen Keil (2) zur Positionierung zwischen den Zahnbögen auf einer Seite des Mundes, ein Schutzblatt (3) umfassend einer ersten Teil (34) zur Zurückstellung der Zunge und einen zweiten Teil (3B) zur Abstützung auf der anderen Seite des Mundes im Vorraum, wobei diese Vorrichtung **dadurch gekennzeichnet ist, dass** der zweite Teil (3B) des Blatts (3) durch ein Rückteil (3C) verlängert ist, um einen am Mundwinkel positionierten Haken darzustellen.

2. Mundschutzvorrichtung nach Anspruch 1, **dadurch gekennzeichnet, dass** das Blatt (3) durch eine flexible schnellverschlussartige Verbindung (100) dem Keil (2) zugeordnet ist, und zwar mit Spiel zur Erleichterung der Ausrichtung der Klinge im Verhältnis zum Keil (2).

3. Mundschutzvorrichtung nach Anspruch 2, **dadurch gekennzeichnet, dass** die flexible Verbindung (100) ein C-profiliertes Einsteckteil (5) aufweist, wobei die Konkavität des C zum Keil (2) ausgerichtet ist, wobei dieses Profil in einem Hohlraum (7), der komplementär zum Keil (2) ist, mit einer nachgiebigen Öffnung zum Zwangsdurchgang des C-Profils verschachtelt ist.

4. Mundschutzvorrichtung nach Anspruch 3, **dadurch gekennzeichnet, dass** die Länge des C-Profils eine translatorische Bewegung dieses Profils innerhalb des umgebenden Hohlraums erlaubt.

5. Mundschutzvorrichtung nach Anspruch 3 oder 4, **dadurch gekennzeichnet, dass** die Konkavität des C-Profils einen Wulst (8) des Keils (2) abdeckt.

6. Mundschutzvorrichtung nach einem der vorhergehenden Ansprüche, **dadurch gekennzeichnet, dass** der Keil (2) beim Anpressen federnd nachgiebig ist und für die Zähne gegenüberliegende Auflagebereiche darstellt.

7. Mundschutzvorrichtung nach Anspruch 6, **dadurch gekennzeichnet, dass** die Auflagebereiche für die Zähne Rippen (1b) darstellen, die das Abrutschen in der Längsrichtung des Keils verhindern und diese Auflagebereiche zur Querpositionierung der Zähne darüber hinaus in der Querrichtung konkav sind.

8. Mundschutzvorrichtung nach Anspruch 1, **dadurch gekennzeichnet, dass** der erste Teil (3A) des Blatts (3) die Form eines gestreckten Blatts hat, das sich mit zunehmender Entfernung vom Keil (2) verjüngt, um sich durch einen gekrümmten Übergangsbcrcich (30) zu verlängern und den zweiten Teil (3B) des Blatts (3) in eine Richtung in der Grössenordnung von 90° im Verhältnis zum ersten Teil (3A) positioniert und dieser zweite Teil (3B) durch ein Rückteil (3C) verlängert ist, um einen Haken darzustellen.

9. Mundschutzvorrichtung nach Anspruch 8, **dadurch gekennzeichnet, dass** eine Materialreduktion (30) zwischen dem ersten Teil (3A) des Blatts und dem zweiten Teil (3B) eine Positionierung hinter den Backenzähnen erlaubt, um ein Verkeilen durch Verklemmen zu erzielen.

## Claims

1. Oral protection device comprising a dental wedge (2) intended to be positioned between the dental arches on one side of the mouth and a protective plate (3) composed of a first part (3A) intended to push back the tongue and a second part (3B) intended to provide support on the other side of the mouth in the vestibule, this device being **characterised in that** the second part (3B) of the plate (3) is extended by a return (3C) to form a hook positioned at the corner of the mouth.

2. Oral protection device according to claim 1, **characterised in that** the plate (3) is linked to the wedge (2) by a flexible, rapid interlock type connection (100) with a clearance enabling the plate to be oriented in relation to the wedge (2).

3. Oral protection device according to claim 2, **characterised in that** the flexible connection (100) comprises a male part (5) in the shape of a C profile, the concavity (6) of the C profile being oriented towards the wedge (2), this profile being interlocked in an additional cavity (7) of the wedge (2) with a deformable opening for the forced passage of the C profile.

4. Oral protection device according to claim 3, **characterised in that** the length of the C profile allows said profile translational movement in the cavity receiving it.

5. Oral protection device according to claim 3 or 4, **characterised in that** the concavity of the C profile caps a pad (8) of the wedge (2).

6. Oral protection device according to any of the preceding claims, **characterised in that** the wedge (2) is elastically deformable by compression and presents opposing support zones for the teeth.

7. Oral protection device according to claim 6, **characterised in that** the teeth support zones present ribs (1b) that prevent sliding along the longitudinal axis of the wedge, and these support zones are moreover concavo on the transverse axis to transversally position the teeth.

8. Oral protection device according to claim 1, **characterised in that** the first part (3A) of the plate (3) takes the form of an elongated strip that contracts, moving away from the wedge (2) to be extended by a transition zone (30) which is bent and positions the second part (3B) of the plate (3) in a direction in the order of 90° in relation to the first part (3A), and this second part (3B) is extended by a return (3C) to form a hook.

9. Oral protection device according to claim 8, **characterised in that** a reduction (30) of material between the first part (3A) of the plate (3) and the second part (3B) allows positioning behind the molars and wedging to be achieved by pinching.
